# FASCICULE DE BREVET EUROPEEN

(11) **EP 2 243 690 B1**
(45) Date de publication et mention de la délivrance du brevet: **26.09.2012**
(21) Numéro de dépôt: 10305423.5
(22) Date de dépôt: 22.04.2010
(51) Int. Cl.: B62D 25/04, B62D 21/15, B62D 29/00

(54) **Structure de pied milieu pour une caisse de vehicule automobile**
B-Säule für eine Kraftfahrzeugkarosserie
Central pillar for a motor vehicle body

(30) Priorité: 22.04.2009 FR 0952618
(43) Date de publication de la demande: 27.10.2010
(73) Titulaire: Renault S.A.S., 92100 Boulogne-Billancourt (FR)
(72) Inventeur: Uhlinger, Jerome, 92150 Suresnes (FR); Jacques, Emmanuel, 78340 Les Clayes sous Bois (FR)

(56) Documents cités:
- EP-A- 0 953 495
- EP-A- 1 234 750
- EP-A- 1 382 513
- EP-A- 2 006 190
- EP-B- 1 180 470
- WO-A-2008/024042

## Description

L'invention concerne une structure de pied milieu pour une caisse de véhicule automobile. Elle concerne également un véhicule automobile équipé d'une telle structure de pied milieu.

On connaît, par le document FR2908729, une structure de pied milieu pour véhicule automobile. En référence à la figure 5 de ce document, cette structure 1 comprend au moins un renfort 2. Le renfort 2 est constitué de deux pièces façonnées par emboutissage d'un flanc de tôle en acier, et assemblées entre elles : une pièce qui fait office de renfort supérieur 2a et une pièce qui fait office de renfort inférieur 2b. Ces renforts 2a et 2b sont assemblés entre eux dans une zone du pied milieu qui se situe vers le bas, approximativement dans le premier quart de la hauteur du pied milieu.

Le document EP2006190 propose une structure de pied milieu selon le préambule de la revendication 1.

Un objectif de l'invention est d'améliorer les caractéristiques du renfort de pied milieu en ce qui concerne la protection des personnes se trouvant à l'intérieur du véhicule, et en ce qui concerne l'absorption d'énergie d'un choc latéral. Cet objectif est atteint par un meilleur contrôle de la déformation de la structure lors d'un choc latéral.

Dans ce but, l'invention concerne la structure de pied milieu selon la revendication 1, comprenant au moins un renfort de pied milieu, le renfort étant constitué de deux pièces assemblées entre elles : une pièce qui fait office de renfort supérieur et une pièce qui fait office de renfort inférieur. Selon l'invention, la structure comporte :
- un renfort supérieur qui est façonné dans un matériau dont la limite élastique est supérieure à celle du matériau du renfort inférieur, et
- un renfort inférieur qui recouvre en partie la surface externe du renfort supérieur.

L'invention permet ainsi d'obtenir un renfort de pied milieu particulièrement bien adapté à la prise en compte d'un choc latéral. L'utilisation d'un renfort supérieur qui est constitué d'un matériau ayant une limite élastique plus élevée que celle du renfort inférieur va privilégier, en cas de choc latéral, la déformation du renfort inférieur.

Cependant l'emploi de matériaux de limites élastiques différentes n'est possible que dans la mesure où l'on peut assurer la continuité de la voie principale d'effort ; c'est-à-dire que le renfort doit, en toutes circonstances du test d'un choc latéral, rester intègre au niveau de la zone d'assemblage du renfort inférieur avec le renfort supérieur. Ce renfort doit rester d'un seul tenant pour transmettre les efforts du choc latéral, d'une part, entre le renfort supérieur et le renfort inférieur, et, d'autre part, à la caisse du véhicule qui, elle aussi, participe à la protection des personnes, et à l'absorption de l'énergie du choc.

L'invention permet d'obtenir cette continuité grâce à un renfort inférieur qui recouvre en partie la surface externe du renfort supérieur. Des moyens de liaison viennent s'ajouter dans cette zone de recouvrement, pour l'assemblage du renfort inférieur avec le renfort supérieur.

L'avantage de faire recouvrir la surface externe du renfort supérieur par le renfort inférieur est que le bord d'extrémité inférieure (du renfort supérieur) qui est rendu très rigide par le matériau utilisé (un matériau à limite élastique plus élevée que celle du matériau du renfort inférieur) a tendance, lors d'un choc externe, à s'écarter du renfort inférieur. C'est-à-dire que ce bord ne peut pas rentrer en contact avec le renfort inférieur, et le cisailler, lors d'un choc latéral.

Le renfort inférieur, qui est façonné dans un matériau de limite élastique plus faible que celle du matériau du renfort supérieur, est prévu pour réaliser une fonction dite de rotule basse ; lors du choc latéral, ce renfort inférieur subit des déformations par flexion pour participer à l'absorption de l'énergie du choc.

Le renfort inférieur est ainsi préservé de toute déchirure susceptible d'être provoquée par le renfort supérieur, laquelle déchirure provoquerait une rupture de la continuité de la voie principale d'effort.

Un autre avantage de l'invention est que cet assemblage des deux renforts ne nécessite pas de pièces supplémentaires de renforcement pour respecter la norme actuelle de choc latéral. Ceci présente un intérêt pour le coût de fabrication du pied milieu.

Selon l'invention, les moyens de liaison des renforts sont constitués de points de soudure répartis dans la zone de recouvrement, en haut et en bas. Dans ce mode de liaison par soudage, on privilégie dans au moins une partie de la zone de recouvrement des renforts, au minimum une paire de points de soudure espacés en hauteur. Et dans un mode de réalisation privilégié de l'invention, les points de soudure sont disposés au moins sur une patte et les flancs des renforts.

L'invention concerne également un véhicule automobile comportant une caisse et au moins une structure de pied milieu telle que décrite ci-dessus ; dans ce véhicule, l'extrémité haute du renfort de pied milieu se raccorde à un brancard de pavillon de la caisse, et l'extrémité basse se raccorde à une poutre de châssis de la caisse.

Mais d'autres caractéristiques et avantages de l'invention apparaîtront à la lecture de la description détaillée qui suit. Pour sa compréhension, on se reportera aux figures suivantes :
- la figure 1 est une représentation schématique d'une partie d'un flanc de la caisse d'un véhicule qui est vue de l'extérieur, sur laquelle se trouvent un brancard de pavillon, une poutre de châssis et une structure de pied milieu ;
- les figures 2a, 2b et 2c représentent la simulation d'un test de choc latéral, selon l'axe Y de la caisse du véhicule, sur le renfort de pied milieu ;
- la figure 3 est un agrandissement de la partie basse du pied milieu vu sur la figure 1, qui représente schématiquement la zone de recouvrement du renfort supérieur par le renfort inférieur ;
- la figure 4 est une vue en coupe selon A-A de la figure 3, de la structure du pied milieu prise dans la zone de recouvrement ;
- la figure 5 est une vue en coupe selon B-B de la figure 3, de la structure du pied milieu au niveau de la zone de recouvrement.

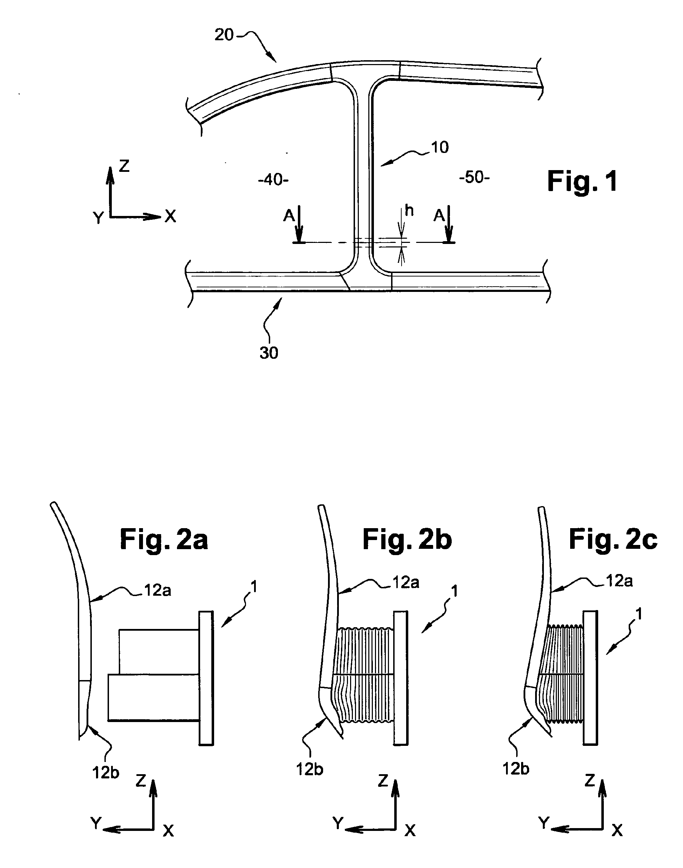

En référence à la figure 1, le pied milieu 10 fait partie de l'ossature de flanc de la caisse d'un véhicule automobile. La caisse du véhicule est référencée à l'aide du trièdre X, Y et Z dans lequel X est l'axe suivant la longueur de la caisse, Y est l'axe suivant la largeur de la caisse, et Z est l'axe suivant la hauteur de la caisse.

Le pied milieu **10** définit avec :
- une première poutre appelée brancard **20** de pavillon,
- une deuxième poutre **30** de châssis, et
- un pied avant (non représenté),
une ouverture avant **40** dans la structure du flanc de la caisse du véhicule permettant l'accès à bord. Cette ouverture **40** peut être fermée par une porte latérale avant (non représentée).

Le pied milieu **10** définit également (sur un véhicule à au moins quatre portes) avec :
- le brancard **20** de pavillon,
- la poutre **30** de châssis, et
- un renfort de custode (non représenté),
une ouverture arrière **50** dans la structure du flanc de la caisse du véhicule permettant l'accès à bord. Cette ouverture **50** peut être fermée par une porte latérale arrière (non représentée).

Le pied milieu **10** se présente lui aussi sous la forme d'une poutre sensiblement verticale, et qui s'étend selon l'axe Z. Le pied milieu **10** est relié, à ses extrémités, au brancard **20** de pavillon et à la poutre **30** de châssis, de préférence à l'aide de points de soudure. Des moyens de fermeture et verrouillage de la porte latérale avant et des charnières d'articulation de la porte latérale arrière peuvent être habituellement rapportés sur cette poutre.

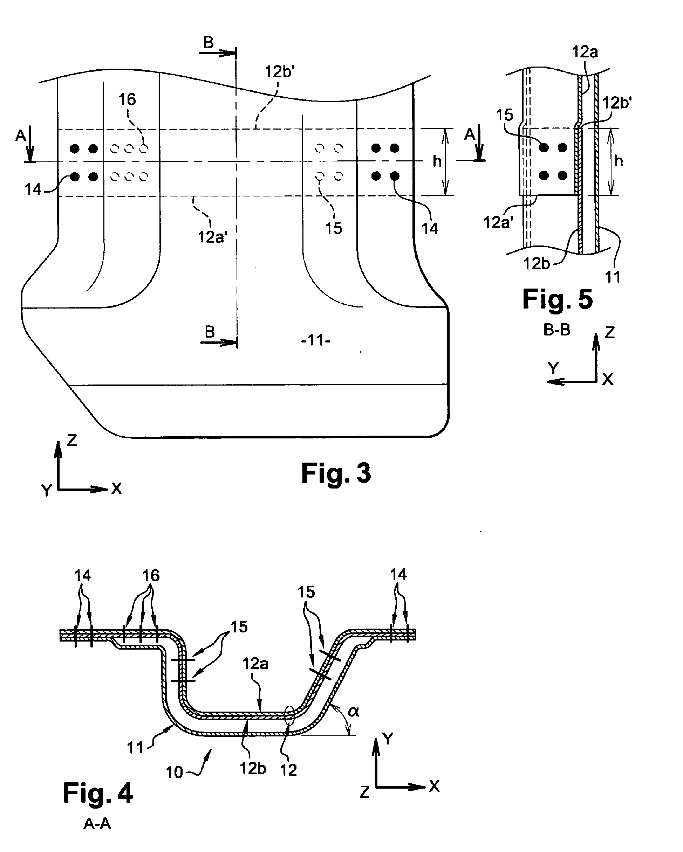

Le pied milieu **10** est une pièce maîtresse complexe qui comporte bien souvent plusieurs éléments assemblés entre eux par collage, soudage ou rivetage. Chaque élément peut, par exemple, être obtenu par emboutissage de flancs de tôles en acier. Parmi ces éléments, on trouve un élément principal qui constitue un renfort de pied milieu **12,** en référence aussi à la figure 4. Et ce renfort **12** est lui-même constitué d'un renfort supérieur **12a** et d'un renfort inférieur **12b.**

En référence aussi aux figures 3 et 5, le pied milieu **10** peut comprendre un élément **11** de côté de caisse de pied milieu qui recouvre tout le renfort de pied milieu **12.** Cet élément **11** peut être assemblé au renfort **12** par des points de soudure.

Le pied milieu **10** peut également comprendre une doublure de pied milieu donnant vers l'intérieur de la caisse du véhicule. Cette doublure, non représentée sur les figures, peut être composée de plusieurs panneaux, et peut laisser des espaces vides pour loger des accessoires dans le corps creux du renfort **12** comme par exemple une attache de ceinture ou encore un enrouleur de ceinture. La doublure est essentiellement destinée à recouvrir la cavité centrale intérieure du renfort **12.**

L'élément **11** de côté de caisse de la structure peut être constitué d'une pièce en tôle emboutie. La section, prise au niveau de la zone de recouvrement de la figure 4 est globalement en forme d'Oméga ; c'est-à-dire un U dont les extrémités sont pliées à l'équerre pour former des pattes d'extrémité qui se trouvent sensiblement dans un même plan. Dans l'exemple de réalisation représenté à la figure 4, les pattes sont sensiblement parallèles à la base plane du U. La forme de cette section est définie de sorte à recouvrir complètement le côté extérieur du renfort de pied milieu **12** dont la section est également en forme d'Oméga.

Le renfort de pied milieu **12** peut également être constitué de pièces en tôle emboutie. Pour expliciter les types d'aciers du renfort supérieur **12a** et du renfort inférieur **12b,** on se reportera au tableau ci-dessous ; ce tableau représente les catégories d'acier selon leur valeur de limite élastique (Re), exprimée en méga pascal (MPa) :

| Aciers doux | Re < 250 MPa |
|---|---|
| Aciers HLE (Haute Limite Elastique) | 250 MPa =< Re < 400 MPa |
| Aciers THLE (Très Haute Limite Elastique) | 400 MPa =< Re < 600 MPa |
| Aciers TTHLE (Très Très Haute Limite Elastique) | 600 MPa =< Re < 900 MPa |
| Aciers UHLE (Ultra Haute Limite Elastique) | 900 MPa =< Re |

Le renfort supérieur **12a** est de préférence dans une tôle d'acier laminée à chaud de type TTHLE, voire UHLE. Le renfort inférieur **12b** est dans une tôle d'acier dont la limite élastique est inférieure à celle du renfort supérieur **12a.** Un acier convenant à cet usage est par exemple un acier HLE.

Le renfort supérieur **12a** représente quasiment toute la hauteur du pied milieu, par exemple les trois quart de la hauteur, tandis que le renfort inférieur **12b** est utilisé sur une hauteur qui lui permet de jouer, au cours du choc latéral, un rôle dit de rotule basse du pied milieu. Cette notion de rotule basse du pied milieu est explicitée à la lumière des figures 2a, 2b et 2c. Ces figures représentent, dans un intervalle de temps de l'ordre de quelques centièmes de secondes, le déroulement du test de choc latéral. Sur chacune de ces figures, on distingue le renfort supérieur **12a** et le renfort inférieur **12b,** ainsi que la barrière **1** utilisée pour simuler le choc latéral.

Sur la figure 2a, la barrière **1** est en approche du renfort inférieur **12b** et du renfort supérieur **12a** à une certaine vitesse donnée, selon l'axe Y. Sur la figure 2b, la barrière **1** est entrée en contact avec les renforts **12a** et **12b :** les parties déformables de la barrière **1** ont commencé à s'écraser sur le renfort de pied milieu ; le renfort supérieur **12a** reste sensiblement en place par comparaison au renfort inférieur **12b** qui commence à subir un moment de flexion d'axe X suffisamment important pour engendrer sa déformation : c'est ce qui est appelé l'effet de rotule basse du renfort inférieur **12b** de pied milieu. Sur la figure 2c, l'écrasement, des éléments déformables de la barrière 1 contre les renforts **12a** et **12b,** continue, et accentue encore plus l'effet de rotule basse du renfort inférieur **12b** de pied milieu. Cet effet de rotule est provoqué dans la partie basse du renfort de pied milieu, en correspondance avec une zone du véhicule où la déformation engendrée n'a pas d'impact significatif sur la sécurité des personnes se trouvant dans le véhicule. C'est pourquoi le renfort supérieur **12a** représente la majeure partie du pied milieu, et que la position en hauteur de l'assemblage du renfort supérieur **12a** avec le renfort **12b,** qui se trouve en général dans le premier quart de la hauteur du pied milieu **10,** dépend notamment de l'architecture intérieure du véhicule.

En référence aux figures 3 à 5, et conformément à l'invention, le renfort inférieur **12b** recouvre en partie la surface externe du renfort supérieur **12a.** Sur la figure 3, la zone de recouvrement est définie entre le bord d'extrémité **12b'** du renfort inférieur **12b** et le bord d'extrémité **12a'** du renfort supérieur **12a ;** le recouvrement s'opère sur une distance **h,** appelée hauteur de recouvrement selon l'axe Z de la caisse du véhicule, et qui est de l'ordre de 50 à 60 mm.

Le recouvrement est associé à des moyens de liaison du renfort inférieur **12b** avec le renfort supérieur **12a** dans la zone de recouvrement. Les moyens de liaison comportent de préférence des points de soudure liant le renfort inférieur **12b** au renfort supérieur **12a.** Sur les figures 3 et 4, on peut distinguer :
- des points de soudure entre les renforts **12a** et **12b** référencés **15** et **16**, et
- des points de soudure entre les renforts **12a, 12b** et l'élément **11** de côté de caisse, référencés **14.**

Dans ce mode de liaison par soudage, on réalise, dans au moins une partie de la zone de recouvrement, au minimum une paire de points de soudure (parmi les points référencés **14, 15** ou **16** sur la figure 4) dans la distance h de recouvrement (figure 3 et 5). C'est-à-dire qu'on réalise au minimum deux points de soudure entre les bords d'extrémité **12a'** et **12b'** selon l'axe Z. La distance h dépend notamment de l'épaisseur et des matériaux des tôles formant les renforts pour permettre la réalisation d'au minimum deux points de soudure espacés en hauteur.

Le renfort inférieur **12b** et le renfort supérieur **12a** de pied milieu sont en forme d'Oméga (figure 4) et ces paires de points de soudure sont de préférence disposés sur les pattes (points **14** et **16**) et les flancs (points **15**) de l'Oméga.

La section des renforts **12a, 12b** en forme d'Oméga est sensiblement similaire à celle de l'élément **11** de côté de caisse décrit ci-avant. La section du renfort inférieur **12b** est de forme complémentaire à celle du renfort supérieur **12a** sur toute sa largeur dans la zone recouvrement, c'est-à-dire suivant l'axe X de la caisse du véhicule, afin de réaliser les points de soudure **15, 16** également décrits ci-avant.

La section est ainsi constituée, en référence à la figure 4, en partant de la gauche vers la droite, d'une première patte sur laquelle se trouve les points de soudure **14** et **16,** suivie d'un premier flanc incliné sensiblement à 90 degrés vers le bas de la figure et sur lequel se trouvent les points de soudures **15.**

On trouve ensuite une face centrale plane, qui forme la base plane de l'Oméga, et qui se prolonge par un deuxième flanc incliné d'un angle α d'environ 60 degrés vers le haut de la figure, et comportant également des points de soudures **15.**

Le premier flanc incliné, la base plane et le deuxième flanc incliné forment un corps creux dont l'ouverture est orientée vers l'intérieur de la caisse du véhicule. Le deuxième flanc incliné est suivi d'une deuxième patte qui se trouve, avec la première patte, sensiblement dans un même plan parallèle à la base plane. On retrouve des points de soudures **14** sur la deuxième patte.

La première patte des sections en Oméga se situe du côté avant de la caisse du véhicule. Elle peut être plus longue que la deuxième patte, ceci afin de former un pied milieu 10 dont la rigidité est renforcée du côté de la porte latérale avant (non représentée), pour empêcher cette porte de pénétrer dans l'habitacle lors du choc latéral. De cette façon, l'élément **11** de côté de caisse en Oméga comporte une première patte (celle de gauche sur la figure 4) dont l'extrémité est en appui sur la première patte du renfort inférieur **12b.**

Les premières pattes du renfort supérieur **12a,** du renfort inférieur **12b** et de l'élément **11** de côté de caisse forment ensemble la feuillure de porte avant, c'est-à-dire le rebord du pied milieu **10** qui reçoit le joint d'étanchéité de la porte latérale avant (non représenté). On réalise de préférence au moins une paire de points de soudure référencés **14** sur cette feuillure composée de trois épaisseurs de tôle. Après ces points de soudure **14,** la première patte de l'élément **11** de côté de caisse se décale du renfort inférieur **12b** pour former un espace vide entre l'élément **11** de côté de caisse et le renfort inférieur **12b** et ce jusqu'au niveau de la jonction entre le deuxième flanc et la deuxième patte de l'élément **11.**

A partir de cette jonction, la deuxième patte de l'élément **11** vient en contact avec celle du renfort inférieur **12b,** et forme, avec les deuxièmes pattes du renfort inférieur **12b** et du renfort supérieur **12a,** la feuillure de porte arrière. Des points de soudures **14** sont également réalisés sur cette feuillure de porte arrière composée de trois épaisseurs de tôle.

Les feuillures, en dehors de la zone de recouvrement, consistent en l'assemblage des pattes de l'élément **11** avec, d'une part, en haut de la zone de recouvrement, les pattes du renfort supérieur **12a,** et d'autre part, en bas de la zone de recouvrement, les pattes du renfort inférieur **12b.** Des points de soudures complémentaires peuvent renforcer l'assemblage de ces feuillures en dehors de la zone de recouvrement.

## Revendications

1. Structure de pied milieu (10) pour une caisse de véhicule automobile comprenant au moins un renfort (12) de pied milieu, le renfort (12) étant constitué de deux pièces façonnées par emboutissage d'un flanc de tôle en acier et assemblées entre elles : une pièce qui fait office de renfort supérieur (12a) et une pièce qui fait office de renfort inférieur (12b), le renfort supérieur (12a) étant façonné dans un matériau dont la limite élastique est supérieure à celle du matériau du renfort inférieur (12b), les sections des renforts inférieur (12b) et supérieur (12a) étant en forme d'Oméga **caractérisée en ce que** le renfort inférieur (12b) recouvre en partie la surface externe du renfort supérieur (12a), la hauteur de recouvrement étant telle que la liaison entre le renfort supérieur (12a) et le renfort inférieur (12b) comprend au minimum une paire de points de soudure (16) espacés en hauteur sur une patte des renforts (12a, 12b) dont les sections sont en forme d'Oméga.

2. Structure de pied milieu selon la revendication 1, **caractérisée en ce qu'**elle comporte des points de soudure (15, 16) qui sont disposés au moins sur une patte et les flancs des renforts (12a, 12b) dont les sections sont en forme d'Oméga.

3. Structure de pied milieu selon l'une des revendications 1 ou 2, **caractérisée en ce qu'**elle comporte un élément (11) de côté de caisse, dont la section est également en forme d'Oméga et qui recouvre le renfort (12) sur toute sa hauteur.

4. Structure de pied milieu selon la revendication 3, **caractérisée en ce qu'**elle comporte des feuillures, qui sont constituées par les pattes de l'élément (11) et du renfort (12) et qui sont assemblées, dans la zone de recouvrement, par au moins une paire de points de soudure (14) espacés en hauteur.

5. Structure de pied milieu selon l'une quelconque des revendications précédentes, **caractérisée en ce qu'**elle comporte un renfort supérieur (12a) façonné dans un acier du type TTHLE ou UHLE et **en ce qu'**elle comporte un renfort inférieur (12b) qui est façonné dans un acier du type HLE.

6. Véhicule automobile, **caractérisé en ce qu'**il comporte une caisse et au moins une structure de pied milieu (10) selon l'une quelconque des revendications précédentes, l'extrémité haute du renfort (12) de pied milieu se raccordant à un brancard (20) de pavillon de la caisse et l'extrémité basse se raccordant à une poutre (30) de châssis de la caisse.

## Claims

1. Centre pillar (10) structure for a motor vehicle body, comprising at least one centre pillar reinforcement (12), the reinforcement (12) being made up of two pieces of steel sheet metal shaped by pressing and assembled with one another; one piece acting as an upper reinforcement (12a) and one piece acting as a lower reinforcement (12b), the upper reinforcement (12a) being made from a material the elastic limit of which is higher than that of the material of the lower reinforcement (12b), the cross sections of the lower (12b) and upper (12a) reinforcement being in the shape of an omega, **characterized in that** the lower reinforcement (12b) partially overlaps the external surface of the upper reinforcement (12a), the height of the overlap being such that the connection between the upper reinforcement (12a) and the lower reinforcement (12b) contains at least one pair of spot welds (16) spaced heightwise along a wing of the reinforcements (12a, 12b) the cross sections of which are in the shape of an omega.

2. Centre pillar structure according to Claim 1, **characterized in that** it comprises spot welds (15, 16) which are arranged at least on a wing and the flanks of the reinforcements (12a, 12b) the cross sections of which are in the shape of an omega.

3. Centre pillar structure according to one of Claims 1 and 2, **characterized in that** it comprises a body side element (11) the cross section of which is likewise in the shape of an omega and which overlaps the reinforcement (12) over its entire height.

4. Centre pillar structure according to Claim 3, **characterized in that** it comprises rebates which consist of the wings of the element (11) and of the reinforcement (12) and which are assembled, in the region of overlap, using at least one pair of spot welds (14) which are spaced heightwise.

5. Centre pillar structure according to any one of the preceding claims, **characterized in that** it comprises an upper reinforcement (12a) made of a steel of the EHSS or UHSS type and **in that** it comprises a lower reinforcement (12b) which is made of a steel of the HSS type.

6. Motor vehicle, **characterized in that** it comprises a body and at least one centre pillar (10) structure according to any one of the preceding claims, the top end of the centre pillar reinforcement (12) being connected to a roof side rail (20) of the body and the bottom end being connected to a chassis beam (30) of the body.

## Patentansprüche

1. B-Säulen-Struktur (10) für eine Kraftfahrzeugkarosserie, die mindestens eine B-Säulen-Verstärkung (12) enthält, wobei die Verstärkung (12) aus zwei Bauteilen besteht, die durch Tiefziehen eines Stahlblechrohlings geformt und dann zusammengebaut werden: ein Bauteil, das als obere Verstärkung (12a) dient, und ein Bauteil, das als untere Verstärkung (12b) dient, wobei die obere Verstärkung (12a) aus einem Material geformt wird, dessen Streckgrenze höher als die des Materials der unteren Verstärkung (12b) ist, wobei die Querschnitte der unteren (12b) und oberen Verstärkung (12a) die Form eines Omega haben, **dadurch gekennzeichnet, dass** die untere Verstärkung (12b) zum Teil die Außenfläche der oberen Verstärkung (12a) überdeckt, wobei die Überdeckungshöhe so ist, dass die Verbindung zwischen der oberen Verstärkung (12a) und der unteren Verstärkung (12b) mindestens ein Paar von Schweißpunkten (16) enthält, die in der Höhe auf einer Lasche der Verstärkungen (12a, 12b) beabstandet sind, deren Querschnitte die Form eines Omega haben.

2. B-Säulen-Struktur nach Anspruch 1, **dadurch gekennzeichnet, dass** sie Schweißpunkte (15, 16) aufweist, die mindestens auf einer Lasche und den Flanken der Verstärkungen (12a, 12b) angeordnet sind, deren Querschnitte die Form eines Omega haben.

3. B-Säulen-Struktur nach einem der Ansprüche 1 oder 2, **dadurch gekennzeichnet, dass** sie ein Karosserie-Seitenelement (11) aufweist, dessen Querschnitt ebenfalls die Form eines Omega hat und das die Verstärkung (12) über ihre ganze Höhe überdeckt.

4. B-Säulen-Struktur nach Anspruch 3, **dadurch gekennzeichnet, dass** sie Falze aufweist, die aus den Laschen des Elements (11) und der Verstärkung (12) bestehen, und die in der Überdeckungszone durch mindestens ein Paar von in der Höhe beabstandeten Schweißpunkten (14) zusammengebaut werden.

5. B-Säulen-Struktur nach einem der vorhergehenden Ansprüche, **dadurch gekennzeichnet, dass** sie eine obere Verstärkung (12a) aufweist, die aus einem Stahl des Typs TTHLE oder UHLE geformt ist, und dass sie eine untere Verstärkung (12b) aufweist, die aus einem Stahl des Typs HLE geformt ist.

6. Kraftfahrzeug, **dadurch gekennzeichnet, dass** es eine Karosserie und mindestens eine B-Säulen-Struktur (10) nach einem der vorhergehenden Ansprüche aufweist, wobei das obere Ende der B-Säulen-Verstärkung (12) an einen Dachlängsträger (20) der Karosserie und das untere Ende an einen Rahmenbalken (30) der Karosserie anschließt.
